# EUROPEAN PATENT SPECIFICATION

(11) **EP 4 027 213 B1**
(45) Date of publication and mention of the grant of the patent: **16.07.2025**
(21) Application number: 20868546.1
(22) Date of filing: 17.09.2020
(51) Int. Cl.: G06F 1/16, G06F 1/20

(54) **ELECTRONIC DEVICE**
ELEKTRONISCHE VORRICHTUNG
DISPOSITIF ÉLECTRONIQUE

(30) Priority: 29.09.2019 CN 201910934725
(43) Date of publication of application: 13.07.2022
(73) Proprietor: Huawei Technologies Co., Ltd., Longgang Shenzhen, Guangdong 518129 (CN)
(72) Inventor: LI, Wei, Shenzhen, Guangdong 518129 (CN); WANG, Jianliang, Shenzhen, Guangdong 518129 (CN); LI, Quanming, Shenzhen, Guangdong 518129 (CN); ZHANG, Zhiguo, Shenzhen, Guangdong 518129 (CN)
(74) Representative: Epping - Hermann - Fischer
(86) International application number: PCT/CN2020/115725
(87) International publication number: WO 2021/057581

(56) References cited:
- CN-A- 105 682 416
- CN-A- 107 066 036
- CN-A- 110 750 135
- CN-U- 204 013 640
- CN-U- 204 374 837
- CN-U- 206 892 796
- US-A1- 2013 229 773
- US-A1- 2016 029 512
- US-A1- 2017 177 043
- US-A1- 2019 141 854

## Description

### TECHNICAL FIELD

This application relates to the field of terminal technologies, and in particular, to an electronic device.

### BACKGROUND

With the development of modem science and technology, electronic products with multiple functions are increasingly favored by people. For example, a two-in-one computer is inspired by a notebook computer and a tablet computer in design and combines the advantages of the latter two. As has gradually been recognized by consumers, the two-in-one computer is suitable for both entertainment and office work due to its lightness, thinness, and portability, and it can be freely transformed into a notebook computer or a tablet computer in various occasions including an office, home, and an outdoor environment. A current two-in-one computer usually uses an air-cooled heat dissipation structure, which ensures heat dissipation performance of a product but brings problems of high noise and high energy consumption, and therefore affects user experience.

US 2016/029512 A1 describes a heat management apparatus for an electronic device that includes a heat spreader. The heat spreader has a top surface and a bottom surface. A first portion is coupled to the electronic device. A second portion extends away from the electronic device.

US 2017/177043 A1 provides an electronic device including two back covers. When one of the back covers is lifted to serve as a stand, the other back cover would be lifted simultaneously to form a gap through which heat generated by electronic elements is easily dissipated so as to enhance heat dissipation for the electronic device.

US 2013/229773 A1 describes a device kickstand that is rotatably attached to a mobile computing device. The kickstand can be rotated to various positions to provide support for different orientations of the computing device. Hinges are employed to attach the kickstand to the computing device.

### SUMMARY

The invention is set out in the appended set of claims. This application provides an electronic device that enlarges a natural heat dissipation area to improve a heat dissipation capability and product performance of the electronic device.

According to a first aspect, an electronic device is provided, where the electronic device includes a housing and a display, the display is disposed into the housing, so that the electronic device becomes a structure having accommodation space inside. The electronic device further includes a heat emitting element, where the heat emitting element is disposed in the accommodation space; a pad-shaped cooling stand, where the pad-shaped cooling stand is pivotally connected to the housing through a rotating shaft and is at least capable of remaining in a first position in a folded state and a second position in a standing state; and a flexible thermal pad, where the flexible thermal pad is flexible and bendable, a first end of the flexible thermal pad extends into the accommodation space through a strip-shaped through hole disposed in the housing, a second end of the flexible thermal pad is attached to the pad-shaped cooling stand, and heat generated by the heat emitting element is conducted to the pad-shaped cooling stand through the flexible thermal pad.

The electronic device provided in this application conducts the heat generated by the heat emitting element to the pad-shaped cooling stand outside the housing through the flexible thermal pad, thereby enlarging a natural heat dissipation area of the electronic device and improving heat dissipation performance of the electronic device. No fan needs to be disposed in the electronic device provided in this application for heat dissipation, so that a noise problem caused by heat dissipation is avoided, and power consumption of the electronic device is reduced. In addition, no fan disposition also facilitates a light and thin design of the electronic device.

In a possible design, the second end of the flexible thermal pad is attached to an inner side of the pad-shaped cooling stand, and the inner side is a side opposite to the housing when the pad-shaped cooling stand is in the first position in the folded state.

In a possible design, the electronic device further includes an enhanced cooling component, and the enhanced cooling component is detachably disposed on the pad-shaped cooling stand. By using the foregoing dispositions, the enhanced cooling component can be disposed on the pad-shaped cooling stand when heat dissipation needs to be enhanced, and the enhanced cooling component can be removed from the pad-shaped cooling stand when heat exchange does not need to be enhanced, for the convenience of a user. The enhanced cooling component may be sold together with the electronic device as an accessory of the electronic device, which improves product competitiveness.

In a possible design, the enhanced cooling component is any one of a cooling fin, a heat pipe, and a vapor chamber. In a possible design, a vapor module is disposed on the heat emitting element, and the first end of the flexible thermal pad is attached to the vapor module, so that heat conduction efficiency can be improved.

In a possible design, the vapor module is a heat pipe or a vapor chamber.

In a possible design, the first end of the flexible thermal pad is attached to the heat emitting element.

In a possible design, the second end of the flexible thermal pad is attached to the pad-shaped cooling stand through a thermally conductive adhesive.

In a possible design, the flexible thermal pad is any one of a flexible graphite sheet, a flexible thermal silicone sheet, a flexible composite sheet, or a flexible vapor chamber.

In a possible design, the pad-shaped cooling stand is a metal stand, so that a heat dissipation effect can be improved. In a possible design, a magnetic component is disposed on the housing, and a magnetic force between the magnetic component and the metal stand is used to keep the pad-shaped cooling stand in the first position in the folded state. In a possible design, a buckle is disposed on the pad-shaped cooling stand, a slot is disposed in a corresponding position on the housing, and the buckle and the slot fit each other to keep the pad-shaped cooling stand in the first position in the folded state.

In a possible design, the electronic device further includes a keyboard, and the keyboard is detachably connected to the housing.

In a possible design, the electronic device is any one of a two-in-one computer, a tablet computer, an integrated computer, a display, or a television set.

According to a second aspect, an electronic device is provided, where the electronic device includes a housing and a display, the display is disposed into the housing, so that the electronic device becomes a structure having accommodation space inside. The electronic device further includes: a heat emitting element, where the heat emitting element is disposed in the accommodation space; and a stand, where the stand is configured to support the housing, a highly thermal material layer is disposed on a support surface of the stand that touches the housing, and heat is conducted from the housing to the stand through the highly thermal material layer.

In a possible design, the electronic device further includes a keyboard, and the keyboard is connected to the stand. In a possible design, the highly thermal material layer is further connected to the keyboard, and can conduct heat to the keyboard.

In a possible design, the highly thermal material layer is further connected to a side surface other than the support surface of the stand, and can conduct heat to another part of the stand.

In a possible design, the stand is a metal stand, so that a heat dissipation effect can be improved.

In a possible design, the highly thermal material layer is at least one of a thermal metal layer, a thermal silicone layer, a thermal film, a graphite layer, and the like.

### BRIEF DESCRIPTION OF DRAWINGS

FIG. 1 is a schematic diagram of a structure of an electronic device according to this application;
FIG. 2 is a schematic cross-sectional view of an example of an electronic device;
FIG. 3 is a schematic cross-sectional view of another example of an electronic device; and
FIG. 4 is a schematic cross-sectional view of still another example of an electronic device.

### DESCRIPTION OF EMBODIMENTS

The following describes implementations of this application in detail. Examples of the implementations are shown in the accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

It should be understood that, the terms "first" and "second" in descriptions of this application are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of this application, "a plurality of" means two or more than two, unless otherwise specifically limited.

For example, a connection may be a fixed connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may interpret specific meanings of the foregoing terms in this application based on specific cases.

In descriptions of this application, it should be understood that locations or location relationships indicated by terms such as "up", "down", "side", "in", and "outside" are locations or location relationships based on disposition, and are merely intended to facilitate and simplify description of this application, but do not indicate or imply that a specified apparatus or element needs to have a specific location or needs to be constructed and operated in a specific location. Therefore, these terms cannot be understood as limitations on this application.

The term "and/or" in this application describes only an association relationship for describing associated objects and indicates that three relationships may exist. For example, A and/or B may indicate the following three cases: Only A exists, both A and B exist, and only B exists.

Embodiments of this application provide an electronic device, where the electronic device may be, but is not limited to, a device having an internal heat emitting element, such as a two-in-one computer, a tablet computer, an integrated computer, a display, or a television set.

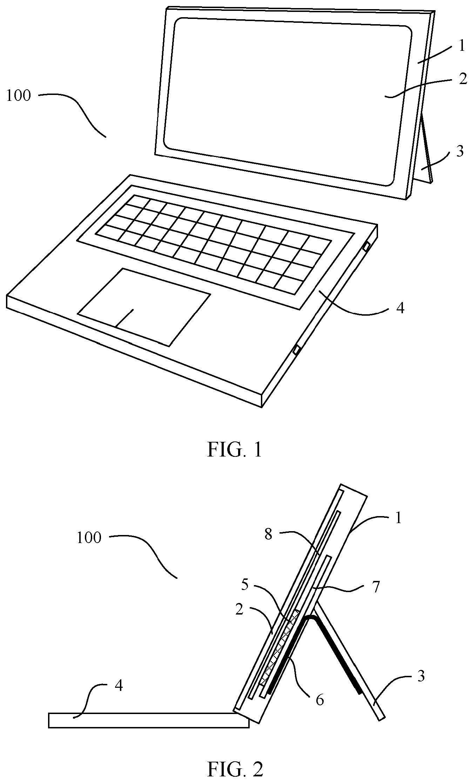

FIG. 1 is a schematic diagram of a structure of an electronic device 100 according to an embodiment of this application. As an example instead of a limitation, in FIG. 1, the electronic device 100 is a two-in-one computer, and includes a housing 1 and a display 2, where the display 2 is disposed into the housing 1, so that the electronic device 100 becomes a closed whole. In addition, the housing 1 and the display 2 jointly limit accommodation space in the electronic device 100. The electronic device 100 further includes an electronic component (not shown in the figure) disposed in the accommodation space. The electronic component includes, but is not limited to, a circuit board, a processor, a sensor, a camera, a microphone, a battery, and the like.

The housing 1 may be a metal housing made of metals such as magnesium alloy or stainless steel. In addition, the housing 1 may alternatively be a plastic housing, a glass housing, a ceramic housing, or the like, but is not limited thereto.

The display 2 may be a light emitting diode (light emitting diode, LED) display, a liquid crystal display (liquid crystal display, LCD), an organic light-emitting diode (organic light-emitting diode, OLED) display, or the like, but is not limited thereto. The display 2 may alternatively be a flexible display that is foldable. In other words, the electronic device 100 may alternatively be a foldable electronic device, for example, a foldable tablet computer.

The electronic device 100 in embodiments of this application is a two-in-one computer. In other words, the electronic device 100 may be used as a common tablet computer or a notebook computer, to meet different use requirements. As shown in FIG. 1, the electronic device 100 further includes a keyboard 4. When the electronic device 100 is used as a notebook computer, the keyboard 4 may be connected to a processor in the housing 1 for communication, and can be used to enter instructions and data.

Optionally, the keyboard 4 is detachably connected to the housing 1. When the electronic device 100 is used as a tablet computer, the keyboard 4 may be removed for convenience of a user.

Optionally, a touchpad may be further disposed on the keyboard 4, so that user operation efficiency can be improved. Optionally, a card reader jack, a USB interface, a headset interface, and the like may be further disposed into a side wall of the keyboard 4 and/or the housing 1, so that service performance of the electronic device 100 can be improved. Compared with a conventional two-in-one computer, the electronic device 100 provided by embodiments of this application enlarges a natural heat dissipation area to improve a heat dissipation capability. In this way, heat dissipation does not need to be performed in an air cooling manner, so that product performance can be improved.

FIG. 2 is a schematic cross-sectional view of an example of the electronic device 100 according to this application. As shown in FIG. 1 and FIG. 2, the electronic device 100 provided by embodiments of this application further includes a pad-shaped cooling stand 3, a heat emitting element 5, and a flexible thermal pad 6.

The pad-shaped cooling stand 3 is pivotally connected to the housing 1 through the rotating shaft, and is at least capable of remaining in a first position in a folded state and a second position (the position shown in FIG. 2) in a standing state.

The heat emitting element 5 is disposed in accommodation space in the electronic device 100.

The flexible thermal pad 6 is flexible and bendable. A first end of the flexible thermal pad 6 extends into the accommodation space in the electronic device 100 through a strip-shaped through hole disposed in the housing 1. A second end (opposite to the first end) of the flexible thermal pad 6 is attached to the pad-shaped cooling stand 3. Heat generated by the heating element 5 can be conducted to the pad-shaped cooling stand 3 through the flexible thermal pad 6.

Specifically, the heat emitting element 5 is disposed in the accommodation space in the electronic device 100 in this application. The heat emitting element 5 can generate heat during operation, and may cause damage to the electronic device 100 when the heat accumulates to a specific extent. Therefore, the heat generated by the heat emitting element 5 needs to be dissipated to the outside of the housing 1 in time.

Optionally, the heat emitting element 5 may be a processor, for example, a central processing unit (central processing unit, CPU), a graphics processing unit (graphics processing unit, GPU), or the like.

Optionally, the heat emitting element 5 may alternatively be the display 2 or a driver of the display 2. The display 2 or the driver of the display 2 also generates much heat after operating for a long time, and the heat needs to be dissipated in time as well.

Optionally, there may be more than one display 2, that is, there may be a plurality of displays 2. Therefore, attention should be paid to heat dissipation of an electronic device having a plurality of displays as well.

To dissipate heat of the heat emitting element 5, the electronic device 100 in this application further includes the flexible thermal pad 6. The first end of the flexible thermal pad 6 is disposed in the accommodation space in the electronic device 100, and the second end opposite to the first end is attached to the pad-shaped cooling stand 3. The flexible thermal pad 6 can conduct the heat generated by the heat emitting element 5 to the outside of the housing 1, and dissipate the heat to an environment through the pad-shaped cooling stand 3.

Optionally, the second end of the flexible thermal pad 6 is attached to the pad-shaped cooling stand through a thermally conductive adhesive, which can ensure that the second end is closely attached to the flexible thermal pad 6, thereby improving heat conduction efficiency.

Optionally, as shown in FIG. 2, a vapor module 7 may be disposed on the heat emitting element 5 to equalize heat. A first end of the flexible thermal pad 6 is attached to the vapor module 7, and heat generated by the heat emitting element 5 is conducted to the flexible thermal pad 6 through the vapor module 7, so that heat conduction efficiency can be improved.

Optionally, the vapor module 7 may be an apparatus with high thermal conductivity, for example, a heat pipe or a vapor chamber (vapor chamber, VC).

It is easy to understand that the flexible thermal pad 6 in this application has both high flexibility and high thermal conductivity, does not crack or break after being bent for a plurality of times, and therefore has high reliability. A material of the flexible thermal pad 6 is not limited in this application. Optionally, the flexible thermal pad 6 is any one or more of a flexible graphite sheet, a flexible thermal silicone sheet, a flexible composite sheet, or a flexible vapor chamber.

In addition, the size of the strip-shaped through hole for the flexible thermal pad 6 to extend through needs to match the flexible thermal pad 6 in width and thickness, and is not too large while ensuring that the flexible thermal pad 6 can extend through the strip-shaped through hole smoothly. Otherwise, dust outside the housing 1 may possibly enter the housing 1 through a gap between the flexible thermal pad 6 and a hole wall of the strip-shaped through hole, thereby damaging the electronic device 100.

As shown in FIG. 2, in this embodiment, the second end of the flexible thermal pad 6 is attached to an inner side of the pad-shaped cooling stand 3, where the inner side is a side opposite to the housing when the pad-shaped cooling stand 3 is in the first position in the folded state, that is, a side that can be attached to an outer side of the housing 1. The foregoing dispositions ensure heat conduction efficiency without affecting aesthetic appeal of the electronic device 100, and make it not possible for a user to touch the flexible thermal pad 6.

The pad-shaped cooling stand 3 in this application is shaped like a pad and has a large heat dissipation area and strong mechanical strength. The pad-shaped cooling stand 3 not only can support the housing 1, but also has high heat dissipation performance, so that heat conducted by the flexible thermal pad 6 can be quickly dissipated to the environment.

Optionally, to improve heat dissipation performance and ensure enough mechanical strength, the pad-shaped cooling stand 3 may be a metal stand, for example, may be any one of a stainless steel stand, a copper stand, an aluminum alloy stand, a magnesium alloy stand, or the like.

The pad-shaped cooling stand 3 is pivotally connected to the housing 1 through the rotating shaft, and is at least capable of remaining in the first position in the folded state and the second position in the standing state.

When the electronic device 100 does not need to be supported (for example, the electronic device 100 is used as a tablet computer handheld by the user), the pad-shaped cooling stand 3 may be adjusted to the first position, that is, the pad-shaped cooling stand 3 is in the folded state. In this case, the pad-shaped cooling stand 3 may be attached to an outer side of the housing 1, so that the user can carry and use the electronic device 100 in a handholding manner.

Optionally, to keep the pad-shaped cooling stand 3 in the first position (to keep it in the folded state), the pad-shaped cooling stand 3 may be configured as a metal stand (for example, a stainless steel stand), and a magnetic component (for example, a magnet, which is not shown in the figure) is disposed on the housing 1. Thereby a magnetic force between the magnetic component and the metal stand is used to keep the pad-shaped cooling stand in the first position in the folded state.

Optionally, to keep the pad-shaped cooling stand 3 in the first position (to keep it in the folded state), a buckle (not shown in the figure) may be disposed on the pad-shaped cooling stand bracket, a slot that adapts to the buckle may be disposed in a corresponding position on the housing 1, and the buckle and the slot fit each other to keep the pad-shaped cooling stand 3 in the first position in the folded state.

The electronic device 100 provided by embodiments of this application conducts heat generated by the heat emitting element 5 to the pad-shaped cooling stand 3 outside the housing 1 through the flexible thermal pad 6, thereby enlarging a natural heat dissipation area of the electronic device 100 and improving heat dissipation performance of the electronic device 100. No fan needs to be disposed in the electronic device 100 provided in embodiments of this application for heat dissipation, so that a noise problem caused by heat dissipation is avoided, and power consumption of the electronic device 100 is reduced. In addition, no fan disposition also facilitates a light and thin design of the electronic device 100.

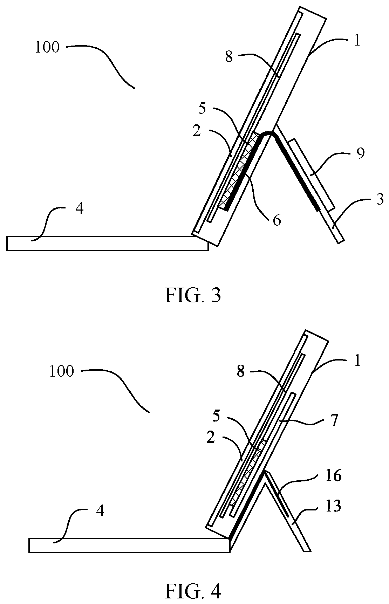

FIG. 3 is a schematic cross-sectional view of another example of the electronic device 100 according to this application. The embodiment shown in FIG. 3 is roughly the same as the embodiment shown in FIG. 2, and a difference between the embodiments is described herein.

As shown in FIG. 3, in this embodiment, no vapor module is disposed on the heat emitting element 5, and a first end of the flexible thermal pad 6 is directly attached to the heat emitting element 5. The foregoing dispositions facilitate a light and thin design of the electronic device 100.

As shown in FIG. 3, to enhance heat exchange, an enhanced cooling component 9 may be disposed on the pad-shaped cooling stand 3. Further, the enhanced cooling component 9 may be detachably disposed on the pad-shaped cooling stand 3, so that the enhanced cooling component 9 can be disposed on the pad-shaped cooling stand 3 when heat dissipation needs to be enhanced, and the enhanced cooling component 9 can be removed from the pad-shaped cooling stand 3 when heat exchange does not need to be enhanced, for the convenience of a user.

The enhanced cooling component 9 may be sold together with the electronic device 100 as an accessory of the latter, which improves product competitiveness.

Optionally, the enhanced cooling component 9 may be any one of a fin, a heat pipe, or a vapor chamber.

FIG. 4 is a schematic cross-sectional view of still another example of the electronic device 100 according to this application. The embodiment shown in FIG. 4 is roughly the same as the embodiments shown in FIG. 1 to FIG. 3, and a difference between the embodiments is described herein.

As shown in FIG. 4, different from the foregoing embodiment, this embodiment replaces the pad-shaped cooling stand 3 in the foregoing embodiment with a stand 13, and replaces the flexible thermal pad 6 in the foregoing embodiment with a highly thermal material layer 16.

The stand 13 is connected to the keyboard 4. The stand 13 is configured to support (or in other words, hold) the housing 1 (that is, configured to hold a main body of the electronic device 100). The highly thermal material layer 16 is disposed on a support surface of the stand 13 that touches the housing 1. The highly thermal material layer 16 can conduct heat from the housing 1 to the stand 13, and dissipate the heat to a surrounding environment through the stand 13.

Optionally, the highly thermal material layer 16 is further connected to the keyboard 4, and can conduct heat to the keyboard 4, which improves heat dissipation performance of the electronic device 100.

Optionally, the highly thermal material layer 16 is further connected to a side surface other than the support surface of the stand 13, and can conduct heat to another part of the stand 13, which improves heat dissipation performance of the electronic device 100.

Optionally, the stand 13 is a metal stand, so that a heat dissipation effect can be improved.

Optionally, the highly thermal material layer 16 is at least one of a thermal metal layer, a thermal silicone layer, a thermal film, a graphite layer, and the like.

The foregoing descriptions are merely specific implementations of this application, but are not intended to limit the protection scope of this application.The protection scope of this application shall be subject to the protection scope of the claims

## Claims

1. An electronic device (100), comprising a housing (1) and a display (2), wherein the display (2) is disposed into the housing (1), so that the electronic device (100) becomes a structure having accommodation space inside, and the electronic device (100) further comprises:
a heat emitting element (5), disposed in the accommodation space;
a pad-shaped cooling stand (3), pivotally connected to the housing (1) through a rotating shaft, and at least capable of remaining in a first position in a folded state and a second position in a standing state; and
a flexible thermal pad (6) that is flexible and bendable, wherein a first end of the flexible thermal pad extends into the accommodation space through a strip-shaped through hole disposed in the housing (1), a second end of the flexible thermal pad is attached to the pad-shaped cooling stand (3), and heat generated by the heat emitting element (5) is conducted to the pad-shaped cooling stand (3) through the flexible thermal pad (6).

2. The electronic device (100) according to claim 1, wherein the second end of the flexible thermal pad (6) is attached to an inner side of the pad-shaped cooling stand (3), and the inner side is a side opposite to the housing (1) when the pad-shaped cooling stand (3) is in the first position in the folded state.

3. The electronic device (100) according to claim 1 or 2, wherein the electronic device (100) further comprises an enhanced cooling component (9), and the enhanced cooling component (9) is detachably disposed on the pad-shaped cooling stand (3).

4. The electronic device (100) according to any one of claims 1 to 3, wherein the enhanced cooling component (9) is any one of a cooling fin, a heat pipe, and a vapor chamber.

5. The electronic device (100) according to any one of claims 1 to 4, wherein a vapor module (7) is disposed on the heat emitting element (5), and the first end of the flexible thermal pad (6) is attached to the vapor module (7).

6. The electronic device (100) according to claim 5, wherein the vapor module (7) is a heat pipe or a vapor chamber.

7. The electronic device (100) according to claims 1 to 5, wherein the first end of the flexible thermal pad (6) is attached to the heat emitting element (5).

8. The electronic device (100) according to any one of claims 1 to 7, wherein the second end of the flexible thermal pad (6) is attached to the pad-shaped cooling stand (3) through a thermally conductive adhesive.

9. The electronic device (100) according to any one of claims 1 to 8, wherein the flexible thermal pad (6) is any one of a flexible graphite sheet, a flexible thermal silicone sheet, a flexible composite sheet, or a flexible vapor chamber.

10. The electronic device (100) according to any one of claims 1 to 9, wherein the pad-shaped cooling stand (3) is a metal stand.

11. The electronic device (100) according to claim 10, wherein a magnetic component is disposed on the housing (1), and a magnetic force between the magnetic component and the metal stand is used to keep the pad-shaped cooling stand (3) in the first position in the folded state.

12. The electronic device (100) according to any one of claims 1 to 10, wherein a buckle is disposed on the pad-shaped cooling stand (3), a slot is disposed in a corresponding position on the housing (1), and the buckle and the slot fit each other to keep the pad-shaped cooling stand (3) in the first position in the folded state.

13. The electronic device (100) according to any one of claims 1 to 12, wherein the electronic device (100) further comprises a keyboard (4), and the keyboard (4) is detachably connected to the housing (1).

14. The electronic device (100) according to any one of claims 1 to 13, wherein the electronic device (100) is any one of a two-in-one computer, a tablet computer, an integrated computer, a display, or a television set.

## Patentansprüche

1. Elektronische Vorrichtung (100), die ein Gehäuse (1) und ein Display (2) umfasst, wobei das Display (2) innerhalb des Gehäuses (1) angeordnet ist, sodass die elektronische Vorrichtung (100) eine Struktur wird, die einen Aufnahmeraum im Inneren aufweist, und die elektronische Vorrichtung (100) ferner Folgendes umfasst:
ein wärmeabgebendes Element (5), das in dem Aufnahmeraum angeordnet ist;
einen kissenförmigen Kühlständer (3), der über eine Drehwelle schwenkbar mit dem Gehäuse (1) verbunden ist und mindestens in einer ersten Position in einem zusammengeklappten Zustand und einer zweiten Position in einem stehenden Zustand verbleiben kann; und
ein flexibles Thermokissen (6), das flexibel und biegbar ist, wobei sich ein erstes Ende des flexiblen Thermokissens durch ein streifenförmiges Durchgangsloch, das in dem Gehäuse (1) angeordnet ist, in den Aufnahmeraum erstreckt, ein zweites Ende des flexiblen Thermokissens an dem kissenförmigen Kühlständer (3) angebracht ist und durch das wärmeabgebende Element (5) erzeugte Wärme durch das flexible Thermokissen (6) zu dem kissenförmigen Kühlständer (3) geleitet wird.

2. Elektronische Vorrichtung (100) gemäß Anspruch 1, wobei das zweite Ende des flexiblen Thermokissens (6) an einer Innenseite des kissenförmigen Kühlständers (3) angebracht ist und die Innenseite eine dem Gehäuse (1) gegenüberliegende Seite ist, wenn sich der kissenförmige Kühlständer (3) in der ersten Position in dem zusammengeklappten Zustand befindet.

3. Elektronische Vorrichtung (100) gemäß Anspruch 1 oder 2, wobei die elektronische Vorrichtung (100) ferner eine verstärkte Kühlkomponente (9) umfasst und die verstärkte Kühlkomponente (9) abnehmbar auf dem kissenförmigen Kühlständer (3) angeordnet ist.

4. Elektronische Vorrichtung (100) gemäß einem der Ansprüche 1 bis 3, wobei die verstärkte Kühlkomponente (9) eine von einer Kühlrippe, einem Wärmerohr und einer Dampfkammer ist.

5. Elektronische Vorrichtung (100) gemäß einem der Ansprüche 1 bis 4, wobei auf dem wärmeabgebenden Element (5) ein Dampfmodul (7) angeordnet ist und das erste Ende des flexiblen Thermokissens (6) an dem Dampfmodul (7) angebracht ist.

6. Elektronische Vorrichtung (100) gemäß Anspruch 5, wobei das Dampfmodul (7) ein Wärmerohr oder eine Dampfkammer ist.

7. Elektronische Vorrichtung (100) gemäß Ansprüchen 1 bis 5, wobei das erste Ende des flexiblen Thermokissens (6) an dem wärmeabgebenden Element (5) angebracht ist.

8. Elektronische Vorrichtung (100) gemäß einem der Ansprüche 1 bis 7, wobei das zweite Ende des flexiblen Thermokissens (6) durch einen wärmeleitenden Klebstoff an dem kissenförmigen Kühlständer (3) angebracht ist.

9. Elektronische Vorrichtung (100) gemäß einem der Ansprüche 1 bis 8, wobei das flexible Thermokissen (6) eine von einer flexiblen Graphitplatte, einer flexiblen thermischen Silikonplatte, einer flexiblen Verbundplatte oder einer flexiblen Dampfkammer ist.

10. Elektronische Vorrichtung (100) gemäß einem der Ansprüche 1 bis 9, wobei der kissenförmige Kühlständer (3) ein Metallständer ist.

11. Elektronische Vorrichtung (100) gemäß Anspruch 10, wobei eine magnetische Komponente auf dem Gehäuse (1) angeordnet ist und eine magnetische Kraft zwischen der magnetischen Komponente und dem Metallständer verwendet wird, um den kissenförmigen Kühlständer (3) in der ersten Position im zusammengeklappten Zustand zu halten.

12. Elektronische Vorrichtung (100) gemäß einem der Ansprüche 1 bis 10, wobei eine Schnalle auf dem kissenförmigen Kühlständer (3) angeordnet ist, ein Schlitz in einer entsprechenden Position auf dem Gehäuse (1) angeordnet ist und die Schnalle und der Schlitz zueinander passen, um den kissenförmigen Kühlständer (3) in der ersten Position in dem zusammengeklappten Zustand zu halten.

13. Elektronische Vorrichtung (100) gemäß einem der Ansprüche 1 bis 12, wobei die elektronische Vorrichtung (100) ferner eine Tastatur (4) umfasst und die Tastatur (4) abnehmbar mit dem Gehäuse (1) verbunden ist.

14. Elektronische Vorrichtung (100) gemäß einem der Ansprüche 1 bis 13, wobei die elektronische Vorrichtung (100) eine von einem Zwei-in-Eins-Computer, einem Tablet-Computer, einem integrierten Computer, einem Display oder einem Fernsehgerät ist.

## Revendications

1. Dispositif électronique (100), comprenant un boîtier (1) et un affichage (2), dans lequel l'affichage (2) est disposé dans le boîtier (1), de sorte que le dispositif électronique (100) devient une structure ayant un espace de logement à l'intérieur, et le dispositif électronique (100) comprend également :
un élément émetteur de chaleur (5), disposé dans l'espace de logement ;
un support de refroidissement en forme de tampon (3), connecté de manière pivotante au boîtier (1) à travers un arbre rotatif, et au moins capable de rester dans une première position dans un état plié et une seconde position dans un état debout ; et
un tampon thermique flexible (6) qui est flexible et pliable, dans lequel une première extrémité du tampon thermique flexible se prolonge dans l'espace de logement à travers un trou traversant en forme de bande disposé dans le boîtier (1), une seconde extrémité du tampon thermique flexible est fixée au support de refroidissement en forme de tampon (3), et la chaleur générée par l'élément émetteur de chaleur (5) est conduite vers le support de refroidissement en forme de tampon (3) à travers le tampon thermique flexible (6).

2. Dispositif électronique (100) selon la revendication 1, dans lequel la seconde extrémité du tampon thermique flexible (6) est fixée à un côté interne du support de refroidissement en forme de tampon (3), et le côté interne est un côté opposé au boîtier (1) lorsque le support de refroidissement en forme de tampon (3) est dans la première position dans l'état plié.

3. Dispositif électronique (100) selon la revendication 1 ou 2, dans lequel le dispositif électronique (100) comprend également un composant de refroidissement amélioré (9), et le composant de refroidissement amélioré (9) est disposé de manière amovible sur le support de refroidissement en forme de tampon (3).

4. Dispositif électronique (100) selon l'une quelconque des revendications 1 à 3, dans lequel le composant de refroidissement amélioré (9) est l'un quelconque d'une ailette de refroidissement, d'un caloduc et d'une chambre à vapeur.

5. Dispositif électronique (100) selon l'une quelconque des revendications 1 à 4, dans lequel un module de vapeur (7) est disposé sur l'élément émetteur de chaleur (5), et la première extrémité du tampon thermique flexible (6) est fixée au module de vapeur (7).

6. Dispositif électronique (100) selon la revendication 5, dans lequel le module de vapeur (7) est un caloduc ou une chambre à vapeur.

7. Dispositif électronique (100) selon les revendications 1 à 5, dans lequel la première extrémité du tampon thermique flexible (6) est fixée à l'élément émetteur de chaleur (5).

8. Dispositif électronique (100) selon l'une quelconque des revendications 1 à 7, dans lequel la seconde extrémité du tampon thermique flexible (6) est fixée au support de refroidissement en forme de tampon (3) à travers un adhésif thermoconducteur.

9. Dispositif électronique (100) selon l'une quelconque des revendications 1 à 8, dans lequel le tampon thermique flexible (6) est l'une quelconque d'une feuille de graphite flexible, d'une feuille de silicone thermique flexible, d'une feuille composite flexible ou d'une chambre à vapeur flexible.

10. Dispositif électronique (100) selon l'une quelconque des revendications 1 à 9, dans lequel le support de refroidissement en forme de tampon (3) est un support métallique.

11. Dispositif électronique (100) selon la revendication 10, dans lequel un composant magnétique est disposé sur le boîtier (1), et une force magnétique entre le composant magnétique et le support métallique est utilisée pour maintenir le support de refroidissement en forme de tampon (3) dans la première position dans l'état plié.

12. Dispositif électronique (100) selon l'une quelconque des revendications 1 à 10, dans lequel une boucle est disposée sur le support de refroidissement en forme de tampon (3), une fente est disposée dans une position correspondante sur le boîtier (1), et la boucle et la fente s'adaptent l'une à l'autre pour maintenir le support de refroidissement en forme de tampon (3) dans la première position dans l'état plié.

13. Dispositif électronique (100) selon l'une quelconque des revendications 1 à 12, dans lequel le dispositif électronique (100) comprend également un clavier (4), et le clavier (4) est connecté de manière amovible au boîtier (1).

14. Dispositif électronique (100) selon l'une quelconque des revendications 1 à 13, dans lequel le dispositif électronique (100) est l'un quelconque d'un ordinateur deux-en-un, d'une tablette électronique, d'un ordinateur intégré, d'un affichage ou d'un téléviseur.
